# EUROPÄISCHE PATENTSCHRIFT

(11) **EP 3 442 821 B1**
(45) Veröffentlichungstag und Bekanntmachung des Hinweises auf die Patenterteilung: **15.03.2023**
(21) Anmeldenummer: 17719508.8
(22) Anmeldetag: 07.04.2017
(51) Int. Cl.: B60L 1/00, B60L 3/12, B60L 58/16, H01M 10/42

(54) **VERFAHREN UND VORRICHTUNG ZUM ABSCHÄTZEN EINES ALTERUNGSZUSTANDS EINES ENERGIESPEICHERSYSTEMS EINES FAHRZEUGES**
A METHOD AND APPARATUS FOR ESTIMATING A AGING STATE OF AN ENERGY STORAGE SYSTEM OF A VEHICLE
PROCEDE ET DISPOSITIF D'EVALUATION DE L'ETAT DE VIEILLISSEMENT D'UN SYSTEME DE STOCKAGE D'ENERGIE D'UN VEHICULE

(30) Priorität: 15.04.2016 DE 102016107038
(43) Veröffentlichungstag der Anmeldung: 20.02.2019
(73) Patentinhaber: Clarios Germany GmbH & Co. KG, 30419 Hannover (DE); Robert Bosch GmbH, 70442 Stuttgart (DE)
(72) Erfinder: KOCH, Ingo, 31789 Hameln (DE); MEISSNER, Eberhard, 31515 Wunstorf (DE); OSTERTAG, Peter, 70195 Stuttgart (DE)
(74) Vertreter: Trinks, Ole
(86) Internationale Anmeldenummer: PCT/EP2017/058385
(87) Internationale Veröffentlichungsnummer: WO 2017/178365

(56) Entgegenhaltungen:
- EP-A1- 2 571 093
- EP-A2- 1 450 173
- JP-A- 2014 054 083
- US-A1- 2013 085 696
- US-A1- 2014 266 227
- US-A1- 2016 078 690

## Beschreibung

Die vorliegende Erfindung betrifft ein Verfahren zum Abschätzen eines Zustands eines Energiespeichersystems eines Fahrzeuges, und zwar zum Abschätzen eines Alterungszustands des Energiespeichersystems. Des Weiteren betrifft die vorliegende Erfindung eine Vorrichtung zum Ausführen des Verfahrens.

Die Zustandsbestimmung eines Energiespeichersystems eines Fahrzeugs gewinnt mit zunehmenden Fahrzeugfunktionen, welche elektrische Energie zumindest zur Unterstützung benötigen, stark an Bedeutung. Da vermehrt sicherheitsrelevante Funktionen des Fahrzeuges elektrische Unterstützung erfahren, wird die Zuverlässigkeit der Zustandsbestimmung und -abschätzung des Energiespeichersystems immer wichtiger.

Bekannte Systeme und Verfahren zur Batteriezustandsermittlung greifen dabei auf direkte Messwerte des Batteriezustands und/oder der Batterieeigenschaften zurück, mittels derer der Batteriezustand bestimmt wird.

So wird beispielsweise ein Verfahren zur Batteriezustandsermittlung in der DE 195 40 827 C2 gelehrt, bei dem batteriespezifische Kennfelder der Batteriealterung genutzt werden, um aus erfassten Momentanwerten der Batteriealterungseinflussgrößen mit Hilfe des Kennfeldes einen Batteriealterungswert zu ermitteln. Auch ist aus der DE 103 35 928 A1 beispielsweise ein Verfahren zur Ermittlung einer auf dem Ladezustand einer Speicherbatterie bezogenen Kenngröße bekannt, bei dem ein erster auf die Ruhespannung der batteriebezogener Ladezustandswert und ein zweiter auf die umgesetzte Ladungsmenge bezogener Ladezustandswert bestimmt wird. Die beiden Ladezustandswerte werden hinsichtlich ihrer Ladezustandsänderung ausgewertet, um aus den Ladezustandsänderungen eine Kenngröße für den Batteriezustand abzuleiten.

Diese bekannten Systeme weisen den Nachteil auf, dass größere Fehler in den Messgrößen die Ausgangsgröße unmittelbar beeinflussen, und daher die Zustandsermittlung des Batteriesystems nicht eindeutig ist bzw. verfälscht werden kann. Des Weiteren kann das Ergebnis der Zustandsermittlung des Energiespeichersystems durch die Wahl des Zeitpunkts in der Messung verfälscht werden; nämlich indem beispielsweise mehrere hintereinander liegende Messungen zu einem Zeitpunkt durchgeführt werden, wenn die Batterie sich in einem ähnlich entladenen Zustand befindet. Somit kann der Batterie fälschlicherweise ein fortgeschrittener Alterungszustand zugeordnet werden, bzw. deren Zustand falsch bestimmt werden, sodass eine Batterie verfrüht ausgetauscht werden kann.

Ein weiterer Nachteil der bekannten Systeme ist in der erhöhten Komplexität begründet, welche durch die zusätzlich notwendigen Sensoren hervorgerufen wird. Ebenso steigt mit jedem zusätzlichen Sensor auch der Bedarf an Speicherplatz für die zusätzlichen Datensätze und an weiteren Elementen zur Datenspeicherung, sodass die Anzahl an benötigten Komponenten, sowie deren Leistungsfähigkeit steigt. Die erhöhte Leistungsfähigkeit der einzelnen Komponenten hat auch höhere Kosten zur Folge.

US2016/078690A1, US2013/085696A1 und EP1450173A2 offenbaren auch Verfahren zum Abschätzen eines Alterungszustands eines Energiespeichersystems eines Fahrzeugs.

Aufgabe dieser Erfindung ist es daher, ein verbessertes Verfahren zum Abschätzen eines Zustands eines Energiespeichersystems anzugeben, welches die Nachteile des Standes der Technik nicht aufweist, und darüber hinaus effizient und zuverlässig ist.

Im Hinblick auf das Verfahren wird die der Erfindung zugrunde liegende Aufgabe erfindungsgemäß durch den Gegenstand des unabhängigen Patentanspruchs 1 gelöst. Im Hinblick auf die Vorrichtung wird die der Erfindung zugrunde liegende Aufgabe durch den Gegenstand des nebengeordneten Patentanspruchs 9 gelöst. Vorteilhafte Weiterbildungen sind in den abhängigen Patentansprüchen angegeben.

Demnach wird erfindungsgemäß insbesondere ein Verfahren zum Abschätzen eines Zustands eines Energiespeichersystems eines Fahrzeuges, und zwar zum Abschätzen eines Alterungszustands eines Energiespeichersystems, angegeben, welches zum Abschätzen des Zustands nicht auf direkt gemessene Werte des Energiespeichersystems angewiesen ist, sondern den Zustand anhand des Verhaltens des Fahrzeugs abschätzen kann.

Der Alterungszustand des Energiespeichersystems entspricht in diesem Zusammenhang einer Änderung jedweden Zustands des Energiespeichersystems bezogen auf den entsprechenden Neu-Zustand des Energiespeichersystems.

Dabei werden in einem ersten Schritt Informationen über das Energiespeichersystem erfasst. Anschließend werden die erfassten Informationen unter Berücksichtigung von vorgegebenen Randbedingungen ausgewertet. Abschließend wird der Zustand des Energiespeichersystems abgeschätzt.

In diesem Zusammenhang sind die Randbedingungen insbesondere auf eine Betriebszeit des Fahrzeugs bezogen, vorzugsweise entsprechen die Randbedingungen Soll- bzw. Referenzwerten, welche auf die Betriebszeit des Fahrzeugs bezogen sind. Sie sind demnach nicht auf einen Zeitpunkt bezogen, zu dem die Auswertung der erfassten Informationen erfolgt.

Die Vorteile der Erfindung liegen auf der Hand. Durch das erfindungsgemäße Verfahren wird der Zustand des Energiespeichersystems anhand eines Vergleichs der erfassten Informationen über das Energiespeichersystem mit vorgegebenen Randbedingungen abgeschätzt. Dadurch wird die Komponentenanzahl gering gehalten, da keine Messeinrichtungen vorgesehen werden müssen, welche die direkten Batteriewerte, wie bspw. Batteriespannung und Batterieladung, erfassen.

Auch werden dadurch die oben genannten Nachteile bzgl. des direkten Messens der Batteriedaten umgangen. Als weiterer Vorteil wird die Gefahr einer Fehleinschätzung des Batteriezustands reduziert. Ebenso können unterschiedliche Batterien von unterschiedlichen Herstellern eingesetzt werden und der Zustand unabhängig des Energiespeichersystems über dasselbe Verfahren abgeschätzt werden, ohne dass konstruktive Änderungen vorgenommen werden müssen. Dies senkt auch die Fertigungskosten, da keine für unterschiedliche Energiespeichersysteme spezifischen Änderungen eingeführt werden müssen. Die Abschätzung des Zustands des Energiespeichersystems wird auf diese Weise vorteilhaft über die Informationen über das Energiespeichersystem bestimmt, und nicht über direkt gemessene Batteriewerte.

Gemäß einem weiteren Aspekt der Erfindung kann das Verfahren vorzugsweise ferner einen weiteren Schritt aufweisen: nämlich das Erfassen von Informationen über Entladevorgänge des Energiespeichersystems.

Dies liefert den Vorteil, dass die Genauigkeit des Abschätzens des Zustands des Energiespeichersystems verbessert werden kann, da zum Abschätzen des Zustands Informationen über Entladevorgänge berücksichtigt werden können, und damit Informationen darüber, was dem Energiespeichersystem an Ladung entnommen werden konnte.

Gemäß einem weiteren Aspekt der Erfindung kann das Verfahren vorzugsweise einen weiteren Schritt aufweisen: nämlich das Erfassen von Informationen über Ladevorgänge des Energiespeichersystems.

Dies birgt den Vorteil, dass die Genauigkeit des Abschätzens des Zustands des Energiespeichersystems verbessert werden kann, da zusätzlich Informationen über die Ladevorgänge berücksichtigt werden können, und damit was dem Energiespeichersystem an Ladung zugeführt werden kann.

Gemäß einem weiteren Aspekt der Erfindung kann das Abschätzen des Zustands des Energiespeichersystems auf Grundlage der erfassten Informationen über das Energiespeichersystem, und/oder auf Grundlage der erfassten Informationen über die Entladevorgänge des Energiespeichersystems, und/oder auf Grundlage der erfassten Informationen über die Ladevorgänge des Energiespeichersystems erfolgen, ohne Berücksichtigung von direkt gemessenen Werten des Energiespeichersystems.

Dadurch wird klargestellt, dass das Abschätzen des Zustands des Energiespeichersystems auf den Informationen über das Energiespeichersystem, und/oder auf den Informationen über die Entladevorgänge, und/oder auf den Informationen über die Ladevorgänge beruht, ohne dass direkt gemessene Werte des Energiespeichersystems berücksichtigt werden. Dies reduziert die Komponentenanzahl im Fahrzeug und senkt somit Fertigungs- und Montagekosten, da keine weiteren Messeinheiten vorgesehen werden müssen.

Gemäß einem weiteren Aspekt der Erfindung können zum Erfassen der Informationen über das Energiespeichersystem und/oder zum Erfassen von Informationen über Entladevorgänge und/oder zum Erfassen von Informationen über Ladevorgänge Fahrzeugfunktionsdaten aufgezeichnet werden.

Daraus ergeben sich unter anderem die Vorteile, dass es sich bei Fahrzeugfunktionsdaten um Daten handelt, die während eines Fahrzeugbetriebs vielmals standardmäßig aufgezeichnet und gespeichert werden. Dadurch wird Speicherplatz gespart, da kein weiterer Satz an Batteriedaten aufgezeichnet werden muss. Darüber hinaus entfallen zusätzliche Kosten für die Fertigung und Montage der Datenspeicherelemente und für die Datenspeicherelemente selbst.

Gemäß einem weiteren Aspekt der Erfindung kann eine Ausgabeinformation auf Grundlage der Fahrzeugfunktionsdaten generiert werden und anschließend bereitgestellt werden, vorzugsweise in Gestalt eines Datensatzes, einer graphischen Darstellung und/oder einer graphischen Benutzeroberfläche.

Dies hat den Vorteil, dass die Ausgabeinformation schnell von relevanten Personen, z. B. Fahrzeugeigentümer, Werkstattmitarbeiter, Kundendienst und/oder Hersteller des Energiespeichersystems oder des Fahrzeugs, gesehen wird. Dies fördert gegebenenfalls ein rasches Handeln, was wiederum die Sicherheit der Fahrzeugbenutzung erhöht und die Verfahrenskosten durch einfache Arbeitsabläufe senkt.

Gemäß einem weiteren Aspekt der Erfindung kann die Ausgabeinformation eine Abschätzung des Zustands des Energiespeichersystems aufweisen. Dies birgt den Vorteil, dass zuständige Personen, wie z. B. der Fahrzeugeigentümer, Werkstattmitarbeiter, Kundendienst und/oder der Hersteller des Energiespeichersystems oder des Fahrzeugs, über den aktuellen Zustand des Energiespeichersystems informiert sind und gegebenenfalls nötige Schritte einleiten können. Dies senkt die Kosten durch einfache Arbeitsabläufe.

Gemäß einem weiteren Aspekt der Erfindung kann über die Fahrzeugfunktionsdaten auf eine Funktionsänderung, insbesondere ein Auftreten, Ausbleiben oder eine Funktionseinschränkung, von mindestens einer Fahrzeugfunktion rückgeschlossen werden bzw. ist über die Fahrzeugfunktionsdaten auf eine Funktionsänderung, insbesondere ein Auftreten, Ausbleiben oder eine Funktionseinschränkung, von mindestens einer Fahrzeugfunktion rückschließbar.

Dabei wird der Zustand des Energiespeichersystems über die Funktionsänderung, insbesondere ein Auftreten, Ausbleiben oder eine Funktionseinschränkung, der Fahrzeugfunktion abgeschätzt, was Messfehler vorteilhafterweise minimiert.

Gemäß einem weiteren Aspekt der Erfindung kann über die Fahrzeugfunktionsdaten auf eine Häufigkeit einer Funktionsänderung, insbesondere eines Auftretens, Ausbleibens oder einer Funktionseinschränkung, von mindestens einer Fahrzeugfunktion während einer festgelegten oder festlegbaren Zeitperiode rückgeschlossen werden, bzw. ist über die Fahrzeugfunktionsdaten auf eine Häufigkeit einer Funktionsänderung, insbesondere eines Auftretens, Ausbleibens oder einer Funktionseinschränkung, von mindestens einer Fahrzeugfunktion während einer festgelegten oder festlegbaren Zeitperiode rückschließbar.

Das hat den Vorteil, dass durch das Berücksichtigen der Häufigkeit die Zuverlässigkeit und Genauigkeit der Abschätzung weiter ansteigt, da berücksichtigt wird, wie oft eine Fahrzeugfunktion während einer festgelegten oder festlegbaren Zeitdauer aufgetreten, eingeschränkt aufgetreten oder ausgeblieben ist.

Gemäß einem weiteren Aspekt der Erfindung kann über die Fahrzeugfunktionsdaten auf eine für eine Funktionsänderung von mindestens einer Fahrzeugfunktion benötigte Zeitspanne rückgeschlossen werden, bzw. ist über die Fahrzeugfunktionsdaten auf eine für eine Funktionsänderung von mindestens einer Fahrzeugfunktion benötigte Zeitspanne rückschließbar, wobei die Funktionsänderung insbesondere ein Auftreten, Ausbleiben oder eine Funktionseinschränkung umfasst.

Dabei wird vorteilhafter Weise die Zeitdauer, welche das Fahrzeug für eine Funktionsänderung einer Fahrzeugfunktion, insbesondere für eine Funktionsänderung einer energieintensiven Fahrzeugfunktion, benötigt, berücksichtigt, was die Zustandsabschätzung des Energiespeichersystems genauer und zuverlässiger erfolgen lässt.

Nach einem weiteren Aspekt der Erfindung kann über die Fahrzeugfunktionsdaten auf einen Grund für eine Funktionsänderung, insbesondere ein Auftreten, Ausbleiben oder eine Funktionseinschränkung, von mindestens einer Fahrzeugfunktion rückgeschlossen werden, bzw. ist über die Fahrzeugfunktionsdaten auf einen Grund für eine Funktionsänderung, insbesondere ein Auftreten, Ausbleiben oder eine Funktionseinschränkung, von mindestens einer Fahrzeugfunktion rückschließbar.

Das hat den Vorteil, dass bereits ein Grund für die Funktionsänderung der Fahrzeugfunktion gefunden wird. Dieser erhöht vorteilhafterweise die Zuverlässigkeit der Zustandsabschätzung des Energiespeichersystems.

Gemäß einem weiteren Aspekt der Erfindung können die Fahrzeugfunktionsdaten Daten über das Erfüllen/Nichterfüllen von mindestens einer Fahrzeugfunktion umfassen, insbesondere Daten über ein Abschalten und/oder Anschalten, insbesondere Wieder-Anschalten, eines Verbrennungsmotors des Fahrzeugs in einem Start-Stopp-Betrieb des Verbrennungsmotors ist.

Insbesondere während des Anschaltens, beziehungsweise des Wieder-Anschaltens, des Verbrennungsmotors ist die Belastung des Energiespeichersystems sehr hoch, da zum Starten des Verbrennungsmotors nur die Leistung des Energiespeichersystems zur Verfügung steht. Daher kann hierüber der Zustand des Energiespeichersystems zuverlässig abgeschätzt werden.

Gemäß einem weiteren Aspekt der Erfindung können die Fahrzeugfunktionsdaten Daten über das Erfüllen/Nichterfüllen von mindestens einer Fahrzeugfunktion umfassen, insbesondere Daten über einen Betrieb von mindestens einer Nutz- oder Sicherheitskomponente, insbesondere Daten über den Betrieb eines Kühlers eines Verbrennungsmotors des Fahrzeugs, einer Innenraumbeleuchtung, einer Außenbeleuchtung, einer Servolenkung, einer Servobremse, eines Getriebes, einer Kupplung, bevorzugt einer elektrischen Kupplung, technischer Fahrsicherheits- und/oder Fahrstabilitätskontrollsysteme, und/oder von Fahrdynamik-Management-Systemen.

Die mindestens eine Nutz- oder Sicherheitskomponente weisen elektrische Verbraucher auf, worüber vorteilhafterweise der Zustand des Energiespeichersystems ebenfalls zuverlässig bestimmt werden kann.

Gemäß einem weiteren Aspekt der Erfindung umfassen die Fahrzeugfunktionsdaten Daten über das Erfüllen/Nichterfüllen von mindestens einer Fahrzeugfunktion, insbesondere Daten über einen Betrieb von mindestens einer Komfortkomponente, insbesondere Daten über den Betrieb einer Klimaanlage, einer Heizung, insbesondere Sitzheizung, eines Audio-/Videoentertainmentsystems und/oder eines Navigationssystems.

Die mindestens eine Komfortkomponenten weisen ebenfalls elektrische Verbraucher auf, worüber vorteilhafterweise der Zustand des Energiespeichersystems zuverlässig bestimmt werden kann.

Gemäß einem weiteren Aspekt der Erfindung können die vorgegebenen Randbedingungen vorab festgelegte oder festlegbare Fahrzeugfunktionsdaten und/oder Musterfahrzeugfunktionsdaten umfassen.

Vorab festgelegte oder festlegbare Fahrzeugfunktionsdaten können in diesem Zusammenhang Fahrzeugfunktionsdaten darstellen, die innerhalb einer Betriebszeit des Fahrzeugs erzielt werden können. Solche festgelegten oder festlegbaren Fahrzeugdaten können darüber hinaus innerhalb einer Betriebszeit eines Fahrzeugs erzielbare Fahrzeugfunktionsdaten darstellen, deren exakten Werte unbekannt sind und daher abgeschätzt wurden.

Musterfahrzeugfunktionsdaten beschreiben hierbei, wofür die Fahrzeugfunktionen ausgelegt sind. Sie stellen somit Soll- bzw. Referenzwerte dar. Vorteilhafterweise kann der Zustand des Energiespeichersystems somit über einen nicht rechenintensiven Auswerteschritt unter Berücksichtigung der Sollwerte und der tatsächlichen Istwerten, d. h. den Fahrzeugfunktionsdaten, abgeschätzt werden.

Gemäß einem weiteren Aspekt der Erfindung können zum Abschätzen des Zustands des Energiespeichersystems gemessene elektrische Eigenschaften des Energiespeichersystems und/oder ein gemessenes elektrisches Verhalten des Energiespeichersystems als zusätzliche Abschätzparameter berücksichtigt werden, wobei die elektrischen Eigenschaften und/oder das elektrische Verhalten bevorzugt über einen Batterietester ermittelt werden.

Dies bringt den Vorteil mit sich, dass die Abschätzung des Zustands des Energiespeichersystems zusätzlich auf eine andere Weise, d. h. über ein unabhängiges Verfahren, kontrolliert und beurteilt wird und damit die Zuverlässigkeit und Genauigkeit der Abschätzung weiter erhöht wird.

Auch kann dadurch eine Plausibilisierung des Abschätzergebnisses des erfindungsgemäßen Verfahrens durchgeführt werden. Da der Zustand des Energiespeichersystems auf zwei voneinander unabhängigen Weisen abgeschätzt wird - genauer gesagt einmal über das Verhalten des Fahrzeugs und das andere Mal über direkt gemessene Werte des Energiespeichersystems -, kann die Aussagekraft der Abschätzung erhöht werden. D. h. wenn beide Zustandsabschätzungen ein ähnliches Ergebnis liefern, ist die Wahrscheinlichkeit hoch, dass die Zustandsabschätzung über das Fahrzeugverhalten zutreffend ist; auf der anderen Seite, wenn beide Zustandsabschätzungen gegenteilige Ergebnisse liefern, ist die Wahrscheinlichkeit, dass eine Abschätzungsweise, insbesondere die Zustandsabschätzung über das Fahrzeugverhalten, einer Fehleinschätzung unterliegt, hoch. Daher kann hierbei vorteilhafterweise die Plausibilität des erfindungsgemäßen Verfahrens beurteilt werden.

Gemäß einem weiteren Aspekt der Erfindung können zum Abschätzen des Zustands des Energiespeichersystems Informationen zum Hersteller, Herstelldatum und/oder Typ des Energiespeichersystems als zusätzliche Abschätzparameter berücksichtigt werden. Auch dies führt zu einer vorteilhaften Erhöhung der Genauigkeit und Zuverlässigkeit der Abschätzung.

Gemäß einem weiteren Aspekt der Erfindung kann das Abschätzen des Zustands des Energiespeichersystems mittels eines Simulationsmodells, insbesondere eines softwarebasierten Simulationsmodells, ausgeführt werden.

Simulationsmodelle weisen den Vorteil auf, dass sie kostengünstig sind, einfach an sich verändernde Umgebungsbedingungen angepasst werden können und für verschiedene Energiespeichersysteme universell einsetzbar sind. Darüber hinaus erhöhen sich die Zuverlässigkeit und die Genauigkeit der Abschätzung. Auch können neue Einflussgrößen durch das Anpassen bestehender Randbedingungen und/oder Einführen zusätzlicher Randbedingungen einfach berücksichtigt werden.

Gemäß einem weiteren Aspekt der Erfindung können die erfassten Informationen über das Energiespeichersystem und/oder die erfassten Informationen über Entladevorgänge und/oder die erfassten Informationen über Ladevorgänge Eingangswerte für das Simulationsmodell sein.

Somit wird der Zustand des Energiespeichersystems vorteilhafterweise über die erfassten Informationen über das Energiespeichersystem, über Entladevorgänge und/oder über Ladevorgänge abgeschätzt, was die Kosten für Messeinrichtungen und dergleichen senkt.

Gemäß einem weiteren Aspekt der Erfindung kann das Energiespeichersystem als eine Sekundärbatterie, insbesondere ein Akkumulator, und/oder als ein Doppelschichtkondensator, und/oder als eine Brennstoffzelle oder als jedwede Kombination hiervon ausgebildet sein.

Dadurch ist offensichtlich, dass das erfindungsgemäße Verfahren vorteilhafterweise in vielen verschiedenen Gebieten der Energiespeicherung universell eingesetzt werden kann, und nicht auf eine Art an Energiespeichersystem beschränkt ist, wobei das Verfahren keinerlei oder nur geringen Modifikationen, wie beispielsweise Anpassen der Randbedingungen, unterzogen werden muss.

Bezüglich der Vorrichtung zum Abschätzen eines Zustands eines Energiespeichersystems eines Fahrzeugs, insbesondere zum Abschätzen des Zustands eines Batteriesystems, eines Doppelschichtkondensators, einer Brennstoffzelle oder jedweder Kombination hiervon, ist vorgesehen, dass die Vorrichtung zum Ausführen des oben beschriebenen erfindungsgemäßen Verfahrens ausgebildet ist.

Gemäß einem weiteren Aspekt der Erfindung kann die Vorrichtung ferner eine Wiedergabeeinheit aufweisen, welche dazu ausgelegt ist, den abgeschätzten Zustand des Energiespeichersystems wiederzugeben.

Dadurch können relevante Personen, wie bspw. der Fahrzeugeigentümer, Werkstattmitarbeiter, der Kundendienst, und/oder der Hersteller des Energiespeichersystems oder des Fahrzeugs, auf den abgeschätzten Zustand des Energiespeichersystems aufmerksam gemacht werden und, wenn nötig, weitere Schritte einleiten. Dies fördert vorteilhafterweise ein schnelles Handeln und erhöht damit die Sicherheit des Fahrzeugs. Dadurch werden auch die Verfahrenskosten durch einfache Arbeitsabläufe gesenkt.

Gemäß einem weiteren Aspekt der Erfindung kann die Vorrichtung im Fahrzeug vorgesehen sein. Das hat den Vorteil, dass die Vorrichtung kontinuierlich den Zustand des Energiespeichersystems abschätzen kann. Dadurch erhöhen sich die Zuverlässigkeit der Abschätzung des Zustands des Energiespeichersystems, und damit auch die Sicherheit des Fahrzeugs.

Genauso kann die Vorrichtung aber auch räumlich und/oder körperlich getrennt vom Fahrzeug vorgesehen sein, wobei die Vorrichtung zur Übertragung der Fahrzeugfunktionsdaten mittels einer Schnittstelle am Fahrzeug mit dem Fahrzeug verbunden ist. Das hat den Vorteil, dass überflüssige bzw. zusätzliche Komponenten im Fahrzeug vermieden werden. Dadurch wird die Komponentenanzahl im Fahrzeug reduziert, sowie die Kosten für leistungsfähigere Elemente im Fahrzeug, welche zum Abschätzen nötig wären, gesenkt.

Gemäß einem weiteren Aspekt der Erfindung kann die Vorrichtung ferner eine Auswerteeinheit aufweisen, welche dazu ausgebildet ist, die erfassten Informationen über das Energiespeichersystem und/oder die erfassten Informationen über Entladevorgänge des Energiespeichersystems, und/oder die erfassten Informationen über Ladevorgänge des Energiespeichersystems, insbesondere Fahrzeugfunktionsdaten, unter Berücksichtigung von vorgegebenen Randbedingungen, insbesondere Musterfahrzeugfunktionsdaten, auszuwerten.

Das hat den Vorteil, dass die Genauigkeit und damit die Zuverlässigkeit der Zustandsabschätzung des Energiespeichersystems erhöht werden.

Gemäß einem weiteren Aspekt der Erfindung kann die Vorrichtung für eine Zustandsbestimmung des Energiespeichersystems des Fahrzeugs verwendet werden, und zwar bezüglich eines Ersatzes des Energiespeichersystems, einer Wartung des Energiespeichersystems, und/oder einer Empfehlung des Ersatzes oder der Wartung des Energiespeichersystems. Dadurch kann die Sicherheit des Fahrzeugbetriebs vorteilhafterweise dauerhaft garantiert werden, weil frühzeitig ein Ersatz oder Wartung des Energiespeichersystems in die Wege geleitet, bzw. zu einem Ersatz oder zu der Wartung des Energiespeichersystems geraten werden kann.

Die Erfindung wird nachstehend, auch hinsichtlich weiterer Merkmale und Vorteile, anhand der Beschreibung von Ausführungsformen unter Bezugnahme auf die beiliegenden Zeichnungen näher erläutert.

Diese zeigen in:
- FIG. 1: eine schematische Darstellung eines Fahrzeugs und einer Vorrichtung;
- FIG. 2: eine detaillierte Darstellung des Fahrzeugs und der Vorrichtung;
- FIG. 3: einen ersten Ablaufplan des erfindungsgemäßen Verfahrens zum Abschätzen des Zustands des Energiespeichersystems; und
- FIG. 4: einen zweiten Ablaufplan des erfindungsgemäßen Verfahren.

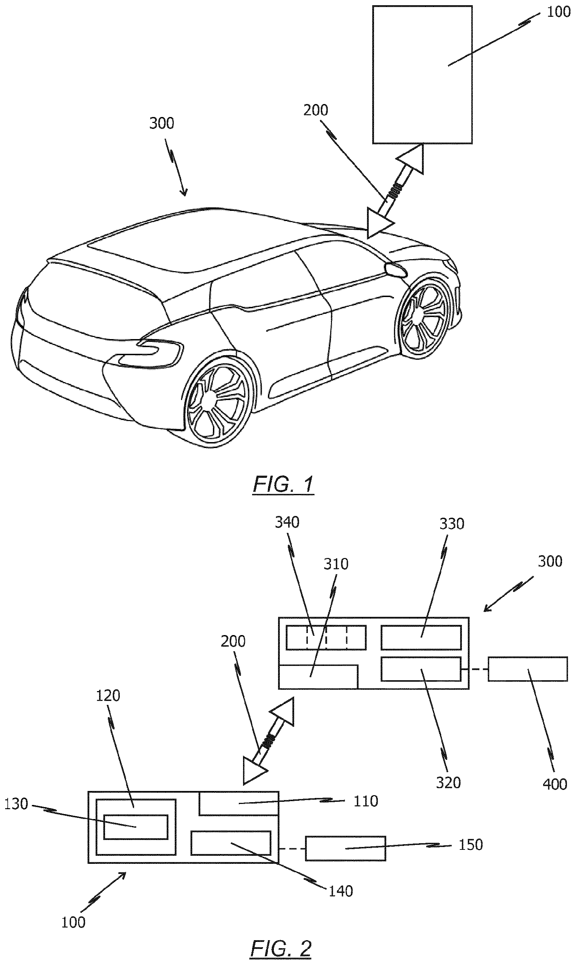

Nachfolgend wird das Verfahren und die Vorrichtung zum Abschätzen eines Zustands eines Energiespeichersystems, insbesondere eines Alterungszustand des Energiespeichersystems, unter Bezugnahme auf die Darstellungen in den Figuren 1 bis 4 beschrieben. Gleiche oder gleichwirkende Elemente und Funktionen sind mit denselben oder ähnlichen Bezugszeichen versehen.

In diesem Zusammenhang ist unter dem Begriff Alterungszustand des Energiespeichersystems 320 eine Änderung jedweden Zustands des Energiespeichersystems 320 bezogen auf den Neu-Zustand des Energiespeichersystems zu verstehen.

FIG. 1 zeigt eine schematische Darstellung eines Fahrzeugs 300 und einer Vorrichtung 100 zum Abschätzen eines Zustands eines Energiespeichersystems des Fahrzeugs 300. Diese sind zur Datenübertragung über eine Verbindung 200 verbunden.

Das Fahrzeug 300 kann ein Luft- oder Wasserfahrzeug, ein spurgeführtes Fahrzeug, ein Geländefahrzeug, oder bevorzugt ein Straßenfahrzeug sein, wobei unter Straßenfahrzeug ein Personenkraftwagen, ein Lastkraftwagen, ein Bus, oder ein Wohnmobil verstanden werden kann.

Das Fahrzeug 300 wird durch eine Antriebseinheit des Fahrzeugs 300 angetrieben. Die Antriebseinheit kann einen Verbrennungsmotor des Fahrzeugs 300, einen Elektromotor oder eine Kombination davon umfassen. Ein Fahrzeug 300, welches zumindest einen Verbrennungsmotor aufweist, kann darüber hinaus über eine Start-Stopp-Funktionalität verfügen, und vorzugsweise ebenso über eine Stopp-in-motion-Funktionalität.

Unter einer Start-Stopp-Funktionalität wird verstanden, dass das Fahrzeug 300 fähig ist, den Verbrennungsmotor des Fahrzeugs 300 in einem Stillstand, der größer oder gleich einer festgelegten oder festlegbaren Zeitspanne ist auszuschalten, beispielsweise beim Stillstand während einer roten Ampelphase ab der festgelegten oder festlegbaren Zeitspanne, und durch bspw. Betätigen eines Pedals oder eines Schalters wieder zuzuschalten.

Unter der Stopp-in-motion-Funktionalität wird verstanden, dass das Fahrzeug 300 fähig ist, den Verbrennungsmotor bereits abzuschalten, wenn das Fahrzeug 300 noch in Bewegung ist, aber für eine festgelegte oder festlegbare Zeitspanne kein Pedal betätigt worden ist oder auf eine andere Weise keine Leistung des Verbrennungsmotors angefordert worden ist. Dies tritt beispielsweise dann auf, wenn sich das Fahrzeug 300 in einem Segelzustand befindet, d. h. wenn sich das Fahrzeug 300 mit einer konstanten Fahrgeschwindigkeit fortbewegen soll, oder wenn sich das Fahrzeug 300 im Ausrollzustand ohne Gas befindet.

Das Fahrzeug 300 weist eine Schnittstelle 310 auf, worüber Daten an die Vorrichtung 100 mittels einer Verbindung zur Datenübermittlung 200 übertragen werden können. In diesem Bezug ist auf FIG. 2 verwiesen.

Darüber hinaus zeigt FIG. 2, dass das Fahrzeug 300 ein Energiespeichersystem 320 aufweist, welches zur Energieversorgung des Fahrzeugs 300 vorgesehen ist.

Das Energiespeichersystem 320 kann als Primärbatterie ausgebildet sein. Bevorzugt ist das Energiespeichersystem 320 des Fahrzeugs 300 als Sekundärbatterie, insbesondere als Akkumulator, als Doppelschichtkondensator, und/oder als Brennstoffzelle, oder als jedwede Kombination hiervon ausgebildet.

Wie in FIG. 2 gezeigt, kann das Fahrzeug 300 eine Datenspeichereinheit 330 aufweisen. Auf dieser können erfasste Informationen über das Energiespeichersystem 320 des Fahrzeugs 300 gespeichert werden.

Bevorzugt können auf der Datenspeichereinheit 330 auch erfasste Informationen über Entladevorgänge des Energiespeichersystems 320 und/oder erfasste Informationen über Ladevorgänge des Energiespeichersystems 320 gespeichert werden.

Besonders bevorzugt werden solche Informationen über eine festgelegte oder festlegbare Zeitperiode erfasst.

Die festgelegte Zeitperiode kann beispielsweise einen Tag, eine Woche, zwei Wochen, einen Monat, drei Monate, sechs Monate oder ein Jahr umfassen.

Genauso kann die festlegbare oder festgelegte Zeitperiode auch über einen Ereignisablauf definiert werden, und zwar beispielsweise von einem Aufsperren des Fahrzeugs 300, einem ins Zündschloss-Stecken des Schlüssels, und/oder einem Anschalten der Antriebseinheit des Fahrzeugs 300 bis zu einem Ausschalten der Antriebseinheit des Fahrzeugs 300, einem Abziehen des Schlüssels aus dem Zündschloss, und/oder einem Absperren des Fahrzeugs 300.

Die festlegbare Zeitperiode kann beispielsweise ebenso durch den zeitlichen Abstand zwischen dem Verlassen der Produktionsstätte und der ersten Abschätzung, beziehungsweise zwischen zwei aufeinanderfolgenden Abschätzvorgängen festgelegt werden oder durch Zeitstempel, welche den jeweiligen Informationen beim Speichern auf die Datenspeichereinheit 330 zugewiesen worden sind, individuell bestimmt werden.

Diese erfassten Informationen umfassen Fahrzeugfunktionsdaten, welche während eines Fahrzeugbetriebs aufgezeichnet werden.

Dabei ist zu beachten, dass das Erfassen der Informationen über das Energiespeichersystem 320 des Fahrzeugs 300 und/oder das Erfassen der Informationen über Entladevorgänge und/oder das Erfassen der Informationen über Ladevorgänge ohne direktes oder indirektes Messen einer Kapazität, Ladung, Spannung, und/oder eines Stroms des Energiespeichersystems 320 erfolgt, d. h. dass das erfindungsgemäße Verfahren zum Abschätzen des Zustands des Energiespeichersystems 320 auf dem Fahrzeugverhalten basiert, insbesondere durch Aufzeichnen von Fahrzeugfunktionsdaten während eines Fahrzeugbetriebs.

Des Weiteren kann das Fahrzeug 300 eine Vielzahl von Messeinheiten 340 aufweisen, welche Fahrzeugdaten kontinuierlich ermitteln und speichern.

Aus diesen Fahrzeugdaten können die Fahrzeugfunktionsdaten ermittelt werden, bzw. können die Fahrzeugfunktionsdaten den Fahrzeugdaten entsprechen.

Die Fahrzeugdaten können von Zähleinheiten, welche dazu ausgelegt ist, die Häufigkeit einer Funktionsänderung zu ermitteln, einer Diagnoseeinheit, insbesondere einer fahrzeuginternen Diagnoseeinheit, einer Batteriesensoreinheit, insbesondere einer intelligenten Batteriesensoreinheit, einer elektronischen Steuereinheit, einer Antriebseinheit des Fahrzeugs 300, und/oder dergleichen bereitgestellt werden.

Es ist zu beachten, dass die Fahrzeugdaten nicht zum Zweck des Abschätzens des Zustands des Energiespeichersystems 320 des Fahrzeugs 300 erzeugt werden. Genauer gesagt, kann das Abschätzen des Zustands des Energiespeichersystems 320 anhand von Daten erfolgen, welche unabhängig hiervon aufgezeichnet und gespeichert worden sind.

Dies liefert den Vorteil, dass zum Aufzeichnen der Fahrzeugfunktionsdaten keine zusätzlichen Messgeräte benötigt werden, sondern die Fahrzeugfunktionsdaten aus Daten ermittelt werden, welche während des Fahrzeugbetriebs aufgezeichnet werden. Dies verringert den Speicheraufwand im Fahrzeug 300 und die Anzahl an Elementen und dadurch auch die Kosten.

Die Fahrzeugdaten und/oder Fahrzeugfunktionsdaten können ebenso direkt in eine Datenbank eines Herstellers des Energiespeichersystems 320 oder des Fahrzeugs 300, eines Kundendienst und/oder einer Werkstatt eingelesen werden bzw. an eine Datenbank des Herstellers des Energiespeichersystems 320 oder des Fahrzeugs 300, des Kundendienst und/oder der Werkstatt gesendet werden. Dies kann beispielsweise über eine drahtlose Verbindung über ein Mobilfunknetzwerk, wie z. B. eine GSM-Verbindung, erfolgen. Über eine solche Remote-Dateneinspeisung können im Fahrzeug 300 auf vorteilhafte Weise die Anzahl an Elementen und dadurch Kosten verringert werden, da der Speicheraufwand im Fahrzeug 300 gering gehalten wird.

Das Fahrzeug 300 ist dazu ausgelegt, mindestens eine Fahrzeugfunktion auszuführen.

Die Fahrzeugfunktionsdaten umfassen Daten über das Erfüllen/Nichterfüllen von mindestens einer Fahrzeugfunktion.

Die Fahrzeugfunktionsdaten umfassen Daten über ein Abschalten und/oder Anschalten, insbesondere Wieder-Anschalten, eines Verbrennungsmotors des Fahrzeugs 300, entweder in einem Start-Stopp-Modus des Verbrennungsmotors, wenn das Fahrzeug 300 für eine vorab festgelegte oder festlegbare Zeitspanne im Stillstand ist, beispielsweise Halten während einer roten Ampelphase für die vorab festgelegte oder festlegbare Zeitspanne, oder während das Fahrzeug 300 in Bewegung ist, ohne dass für eine vorab festgelegte oder festlegbare Zeitspanne bspw. ein Pedal betätigt worden ist oder auf eine andere Art eine Leistung des Verbrennungsmotors des Fahrzeugs 300 angefordert worden ist, während eines Stopp-in-motion-Modus.

Darüber hinaus umfassen die Fahrzeugfunktionsdaten Daten über einen Betrieb von mindestens einer Nutz- oder Sicherheitskomponente, Daten über den Betrieb eines Kühlers eines Verbrennungsmotors des Fahrzeugs 300, einer Innenraumbeleuchtung, einer Außenbeleuchtung, einer Servolenkung, einer Servobremse, eines Getriebes, einer Kupplung, bevorzugt einer elektrischen Kupplung, technischer Fahrsicherheits- und/oder Fahrstabilitätskontrollsystemen, und/oder von Fahrdynamik-Management-Systemen.

Darüber hinaus umfassen die Fahrzeugfunktionsdaten Daten über einen Betrieb von mindestens einer Komfortkomponente,

Daten über den Betrieb einer Klimaanlage, einer Heizung, insbesondere einer Sitzheizung, eines Audio-/Videoentertainmentsystems und/oder eines Navigationssystems.

Über die Fahrzeugfunktionsdaten kann auf eine Funktionsänderung, ein Auftreten, Ausbleiben oder eine Funktionseinschränkung, von mindestens einer Fahrzeugfunktion rückgeschlossen werden bzw. ist über die Fahrzeugfunktionsdaten auf eine Funktionsänderung, ein Auftreten, Ausbleiben oder eine Funktionseinschränkung, von mindestens einer Fahrzeugfunktion rückschließbar.

Darüber hinaus kann über die Fahrzeugfunktionsdaten auch auf eine Häufigkeit einer Funktionsänderung, insbesondere eines Auftretens, Ausbleiben oder einer Funktionseinschränkung, von mindestens einer Fahrzeugfunktion während einer festgelegten oder festlegbaren Zeitperiode rückgeschlossen werden, bzw. ist über die Fahrzeugfunktionsdaten auch auf eine Häufigkeit einer Funktionsänderung, insbesondere eines Auftretens, Ausbleibens oder einer Funktionseinschränkung, von mindestens einer Fahrzeugfunktion während einer festgelegten oder festlegbaren Zeitperiode rückschließbar.

Über die Fahrzeugfunktionsdaten kann überdies auf die Zeitspanne, welche für eine Funktionsänderung, insbesondere ein Auftreten, Ausbleiben oder eine Funktionseinschränkung, von mindestens einer Fahrzeugfunktion benötigt wird, rückgeschlossen werden, bzw. ist über die Fahrzeugfunktionsdaten überdies auf die Zeitspanne, welche für eine Funktionsänderung, insbesondere ein Auftreten, Ausbleiben oder eine Funktionseinschränkung, von mindestens einer Fahrzeugfunktion benötigt wird, rückschließbar.

Auch kann über die Fahrzeugfunktionsdaten auf einen Grund für eine Funktionsänderung, insbesondere ein Auftreten, Ausbleiben oder eine Funktionseinschränkung, von mindestens einer Fahrzeugfunktion rückgeschlossen werden, bzw. ist über die Fahrzeugfunktionsdaten auf einen Grund für eine Funktionsänderung, insbesondere ein Auftreten, Ausbleiben oder eine Funktionseinschränkung, von mindestens einer Fahrzeugfunktion rückschließbar.

Der Grund für eine Funktionsänderung, insbesondere ein Auftreten, Ausbleiben oder eine Funktionseinschränkung, der mindestens einen Fahrzeugfunktion kann dabei eine Batterieeigenschaft und/oder eine Batterieleistung und/oder eine Batteriespannung und/oder einen Batteriestrom und/oder einen zeitlichen Verlauf von Batterieeigenschaft, Batterieleistung, Batteriespannung und/oder Batteriestrom und/oder ein Modell zum Abschätzen der Batterieeigenschaft und/oder der Batterieleistung umfassen.

Das Fahrzeug 300 kann als Fahrzeug mit Verbrennungsmotor, als Elektrofahrzeug, oder als Hybridfahrzeug ausgebildet sein. In diesem Zusammenhang sei darauf hingewiesen, dass zur Abschätzung des Zustands des Energiespeichersystems 320 des Fahrzeugs 300 die Abschätzung unabhängig vom Vorhandensein eines Verbrennungsmotors, d. h. bspw. einer Start-Stopp-Funktionalität, erfolgen kann, und zwar über die Betrachtung von Daten von mindestens einer Nutz- oder Sicherheitskomponente und/oder über die Betrachtung von Daten von mindestens einer Komfortkomponente.

Die Fahrzeugfunktionsdaten werden zum Abschätzen an die Vorrichtung 100 übermittelt. Dies wird in FIGS. 1 und 2 durch den Pfeil 200 angedeutet.

Auch wenn dies nicht explizit in den Figuren dargestellt ist, kann eine Übermittlung der Fahrzeugfunktionsdaten auch von der Datenbank an die Vorrichtung 100 erfolgen. Genauso ist es denkbar, dass die Datenbank als Teil der Vorrichtung 100 vorgesehen ist.

Es ist zu beachten, dass die Fahrzeugfunktionsdaten zum Zeitpunkt, an dem die Fahrzeugfunktionsdaten zum Abschätzen übermittelt werden, Informationen über in der Vergangenheit liegende Ereignisse umfassen, d. h. dass die Fahrzeugfunktionsdaten zum Zeitpunkt der Abschätzung historische Fahrzeugfunktionsdaten darstellen.

Die Verbindung zur Datenübertragung 200 kann drahtgebunden oder drahtlos errichtet werden. Die Daten können beispielsweise über das Internet, eine LAN-Verbindung, eine WAN-Verbindung oder eine USB-Verbindung übertragen werden. Genauso ist es aber auch denkbar, dass die Fahrzeugfunktionsdaten über eine WLAN-Verbindung, eine Bluetooth-Verbindung, eine Near-Field-Communication-Verbindung, eine GSM-Verbindung oder eine UMTS-Verbindung übertragen werden.

Die Datenübertragung kann kontinuierlich erfolgen. Vorzugsweise wird aber die Verbindung zur Datenübertragung 200 nur zu bestimmten Zeitpunkten aufgebaut.

Dies kann besonders bevorzugt während einer Untersuchung in einer Werkstatt erfolgen.

Die Vorrichtung 100 zum Abschätzen des Zustands des Energiespeichersystems 320 des Fahrzeugs 300 kann im Fahrzeug 300 vorgesehen sein. Vorzugsweise ist diese aber räumlich und/oder strukturell vom Fahrzeug 300 getrennt vorgesehen. Dies reduziert vorteilhafter Weise die Komponentenanzahl im Fahrzeug 300 sowie die Verdrahtungs- und damit den Montageaufwand.

Auch werden dadurch, dass die Abschätzung getrennt vom Fahrzeug 300 erfolgt, rechenintensive Vorgänge, wie das Durchführen der Abschätzung, vom Fahrzeug 300 getrennt vorgesehen, was die Kosten reduziert, welche für hochwertigere Fahrzeugkomponenten anfallen würden.

Die Vorrichtung 100 ist dazu ausgelegt, den Zustand des Energiespeichersystems 320 des Fahrzeugs 300 abzuschätzen.

Bevorzugt ist die Vorrichtung 100 dazu ausgelegt, den Zustand des Energiespeichersystems 320 des Fahrzeugs 300 auf Grundlage der Auswertung der erfassten Informationen über das Energiespeichersystem 320 unter Berücksichtigung von vorgegebenen Randbedingungen abzuschätzen.

Besonders bevorzugt ist die Vorrichtung 100 dazu ausgelegt, den Zustand des Energiespeichersystems 320 des Fahrzeugs 300 auf Grundlage eines Vergleichs der erfassten Informationen über das Energiespeichersystem 320 mit den vorgegebenen Randbedingungen, insbesondere auf Grundlage eines Vergleichs von Fahrzeugfunktionsdaten mit Musterfahrzeugfunktionsdaten, abzuschätzen.

In einer Weiterbildung ist die Vorrichtung 100 dazu ausgelegt, den Zustand des Energiespeichersystems 320 des Fahrzeugs 300 anhand von erfassten Informationen über Entladevorgänge des Energiespeichersystems 320 des Fahrzeugs 300 abschätzen zu können.

Auch ist die Vorrichtung 100 dazu ausgelegt, den Zustand des Energiespeichersystems 320 des Fahrzeugs 300 anhand von erfassten Informationen über Ladevorgänge des Energiespeichersystems 320 des Fahrzeugs 300 abschätzen zu können.

Im Folgenden seien unter "erfassten Informationen" die erfassten Informationen über das Energiespeichersystem 320 und/oder die erfassten Informationen über Entladevorgänge des Energiespeichersystems 320 und/oder die erfassten Informationen über Ladevorgänge des Energiespeichersystems 320 zu verstehen.

Dazu weist die Vorrichtung 100 Hardware- und Software-Komponenten auf, welche die Abschätzung des Zustands des Energiespeichersystems 320 durchführen können. Darüber hinaus weist die Vorrichtung 100 bevorzugt einen Prozessor auf.

Wie in FIG. 2 gezeigt, kann eine Empfängereinheit 110 der Vorrichtung 100 dazu die erfassten Informationen des Energiespeichersystems 320 des Fahrzeugs 300, insbesondere Fahrzeugfunktionsdaten, vom Fahrzeug 300 empfangen und diese an eine Abschätzeinheit 120 weiterleiten. Die Abschätzeinheit 120 ist dazu ausgelegt, den Zustand des Energiespeichersystems 320 abzuschätzen.

FIG. 2 zeigt darüber hinaus, dass die Vorrichtung 100 ferner eine Auswerteeinheit 130 aufweisen kann. Die Auswerteeinheit 130 ist dazu ausgebildet, die erfassten Informationen, insbesondere Fahrzeugfunktionsdaten, unter Berücksichtigung von vorgegebenen Randbedingungen, insbesondere vorab festgelegte oder festlegbare Fahrzeugfunktionsdaten und/oder Musterfahrzeugdaten, auszuwerten.

Bevorzugt werden zum Auswerten die erfassten Informationen, insbesondere Fahrzeugfunktionsdaten, mit den vorgegebenen Randbedingungen, insbesondere den vorab festgelegten oder festlegbaren Fahrzeugfunktionsdaten und/oder den Musterfahrzeugdaten, verglichen.

Bevorzugt ist die Auswerteeinheit 130 als ein Element der Abschätzeinheit 120 vorgesehen, wie es in FIG. 2 dargestellt ist.

Auch wenn es in den Figuren nicht abgebildet ist, ist es aber auch denkbar, dass die Auswerteeinheit 130 als Element der Vorrichtung 100 vorgesehen ist und mit der Abschätzeinheit 120 über eine Datenverbindung kommuniziert.

In einer Ausführungsform weist die Abschätzeinheit 120 ein Simulationsmodell auf, insbesondere ein softwarebasiertes Simulationsmodell. In diesem Fall sind die erfassten Informationen vorzugsweise Eingangswerte für das Simulationsmodell.

Die vorgegebenen Randbedingungen können in einer Speichereinheit 140 der Vorrichtung 100 gespeichert sein. Die vorgegebenen Randbedingungen geben einen Richtwert von mindestens einer Fahrzeugfunktion an bezogen auf eine Betriebszeit des Fahrzeugs 300, für den das Energiespeichersystem 320 ausgelegt ist. Die Randbedingungen stellen somit Soll- bzw. Referenzwerte zu den jeweiligen Fahrzeugfunktionsdaten dar, und zwar bezogen auf die Betriebszeit des Fahrzeugs. Beispielsweise können die vorgegebenen Randbedingungen Informationen darüber enthalten, wie oft eine Fahrzeugfunktion innerhalb einer festgelegten oder festlegbaren Zeitperiode ausführbar sein soll bzw. ausgeführt werden können soll oder nicht ausführbar sein soll bzw. nicht ausgeführt werden können soll.

Die vorgegebenen Randbedingungen können in Nachschlagtafeln enthalten sein, welche vom Hersteller, Kundendienst, und/oder den Werkstätten bereitgestellt werden. Diese vorgegebenen Randbedingungen werden im Folgenden als festgelegte, vorgegebene Randbedingungen bezeichnet.

Darüber hinaus können die vorgegebenen Randbedingungen im Laufe der Zeit mit Erfahrungswerten, d. h. mit reellen Werten, ergänzt und angepasst werden, wobei die Erfahrungswerte bevorzugt von Werkstätten und/oder vom Hersteller/und oder Kundendienst zur Verfügung gestellt werden. Insbesondere werden solche Erfahrungswerte durch eingehendes Betrachten des Zusammenhangs zwischen Fahrzeugverhalten, insbesondere Erfüllen/Nichterfüllen von mindestens einer Fahrzeugfunktion, d. h. den Fahrzeugfunktionsdaten, und den Zustand des Energiespeichersystems 320 von vielen ähnlichen Fahrzeugen 300 mit gleichen oder ähnlichen Energiespeichersystemen 320 gewonnen. Solche vorbestimmten Werte werden im weiteren Verlauf als erlernte, vorgegebene Randbedingungen bezeichnet. Dies erhöht die Zuverlässigkeit und Genauigkeit der Abschätzung des Zustands des Energiespeichersystems 320 stark.

Die Fahrzeugfunktionsdaten von mindestens einer Fahrzeugfunktion können unter Berücksichtigung der erlernten oder festgelegten, vorgegebenen Randbedingungen der entsprechenden Fahrzeugfunktion ausgewertet werden. Dies erfolgt bevorzugt in der Auswerteeinheit 130, wie in FIG. 2 dargestellt. Es ist aber auch denkbar, dass die Abschätzeinheit 120 auch zum Auswerten der Fahrzeugfunktionsdaten unter Berücksichtigung der erlernten oder festgelegten, vorgegebenen Randbedingungen ausgelegt ist.

Bevorzugt erfolgt das Auswerten durch Vergleichen der Fahrzeugfunktionsdaten von mindestens einer Fahrzeugfunktion mit den jeweiligen erlernten oder festgelegten, vorgegebenen Randbedingungen.

Die Fahrzeugfunktionsdaten können also dazu verwendet werden, um Abweichung von einem normalen Fahrzeugfunktion-Verhalten zu erfassen und um ein erwartetes Verhalten des Energiespeichersystems 320 abzuschätzen.

Ferner kann eine Ausgabeinformation auf Grundlage der Fahrzeugfunktionsdaten generiert und anschließend vorzugsweise in Gestalt eines Datensatzes, einer graphischen Darstellung und/oder einer graphischen Benutzeroberfläche bereitgestellt werden. Dies erfolgt bevorzugt mittels einer Ausgabeeinheit 150, wie in FIG. 2 angedeutet.

Die Ausgabeinformation kann des Weiteren dahingehend verwendet werden, um bspw. einen Fahrzeugeigentümer zu informieren, ob die Batterie der Auslöser dafür ist, dass das Fahrzeugverhalten vom erwarteten Verhalten abweicht. Es ist aber auch denkbar, dass die Ausgabeinformation dahingehend verwendet werden kann, um bspw. einen Fahrzeugeigentümer zu informieren, ob ein Batterieersatz die Abweichungen vom erwarteten Fahrzeugverhalten reduzieren würde.

Dabei kann die Ausgabeinformation eine Abschätzung des Zustands des Energiespeichersystems 320 sein.

Die Ausgabeeinheit 150 kann in der Vorrichtung 100 angeordnet sein. Des Weiteren kann die Ausgabeeinheit 150 aber genauso gut im Fahrzeug 300 vorgesehen sein. Bevorzugt aber ist die Ausgabeeinheit 150 getrennt von der Vorrichtung 100 und getrennt vom Fahrzeug 300 vorgesehen, beispielsweise in einer Werkstatt. Diese Ausführungsform ist in FIG. 2 angedeutet.

Die Ausgabeeinheit 150 kann ein Mobiltelefon, insbesondere ein Smartphone, einen PC, insbesondere einen Tablet-PC und/oder einen Laptop, ein Display im Fahrzeug, eine graphische Benutzeroberfläche, und/oder ein Diagnosegerät, insbesondere ein Werkstatt-Diagnosegerät, umfassen. Damit wird vorteilhafterweise sichergestellt, dass das Ergebnis der Abschätzung entweder dem Fahrzeugeigentümer, einem Kundendienstmitarbeiter, dem Hersteller, und/oder einem Werkstattmitarbeiter zur Verfügung gestellt wird.

In einer bevorzugten Ausführungsform ist die Vorrichtung 100 getrennt vom Fahrzeug 300 in einer Werkstatt vorgesehen. Dabei werden, bspw. während einer Untersuchung des Fahrzeugs 300, die Fahrzeugfunktionsdaten an die Vorrichtung 100 übermittelt. Die Abschätzung des Zustands des Energiespeichersystems 320 des Fahrzeugs 300 erfolgt in der Vorrichtung 100. Das Ergebnis wird dem Werkstattmitarbeiter angezeigt, welcher in einem weiteren Schritt den Fahrzeugeigentümer über den Zustand des Energiespeichersystems 320 informieren kann und gegebenenfalls eine Bestellung eines neuen Energiespeichersystems 320 einleiten kann.

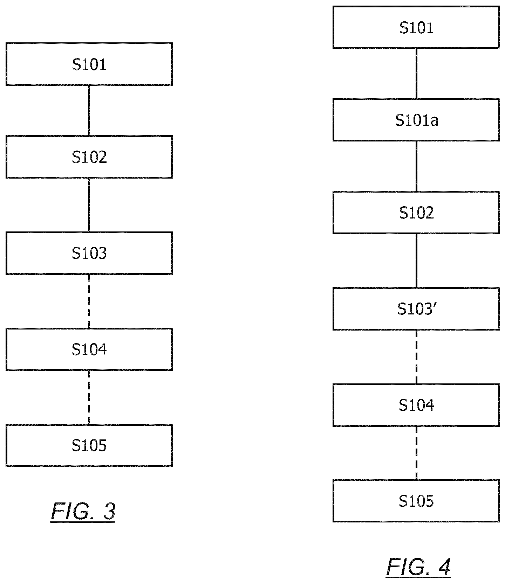

In FIG. 3. wird eine Ausführungsform des erfindungsgemäßen Verfahrens beschrieben.

Dabei werden im Schritt S101 Informationen über das Energiespeichersystem 320 des Fahrzeugs 300 erfasst. Das Erfassen der Informationen über das Energiespeichersystem 320 kann insbesondere über das Aufzeichnen von Fahrzeugfunktionsdaten erfolgen.

Die Fahrzeugfunktionsdaten können dabei zum einen Informationen über eine tatsächliche Funktionsänderung, insbesondere ein Auftreten, Ausbleiben oder eine Funktionseinschränkung, von mindestens einer Fahrzeugfunktion umfassen, und/oder zum anderen Informationen wie eine Häufigkeit einer Funktionsänderung, insbesondere eines Auftretens, Ausbleibens oder einer Funktionseinschränkung, der mindestens einen Fahrzeugfunktion während einer vorab festgelegten oder festlegbaren Zeitperiode, und/oder eine für eine Funktionsänderung, insbesondere einem Auftreten, Ausbleiben oder einer Funktionseinschränkung, der mindestens einen Fahrzeugfunktion benötigte Zeitspanne, und/oder einen Grund für eine Funktionsänderung, insbesondere ein Auftreten, Ausbleiben oder eine Funktionseinschränkung, der mindestens einen Fahrzeugfunktion umfassen.

In einer bevorzugten Ausführungsform umfassen die Fahrzeugfunktionsdaten Informationen über die Häufigkeit der Funktionsänderung, insbesondere des Auftretens, Ausbleibens oder der Funktionseinschränkung, von mindestens einer Fahrzeugfunktion über eine festgelegte oder festlegbare Zeitperiode und den Grund für das Ausbleiben von mindestens einer Fahrzeugfunktion.

Die festgelegte Zeitperiode kann eine Zeitperiode von einem Tag, drei Tagen, einer Woche, zwei Wochen, einen Monat, drei Monate, sechs Monate oder ein Jahr umfassen, und die festlegbare Zeitperiode kann durch den zeitlichen Abstand zwischen dem Verlassen der Produktionsstätte und der ersten Abschätzung, beziehungsweise zwischen zwei aufeinanderfolgenden Abschätzvorgängen festgelegt werden oder durch Zeitstempel, welche den jeweiligen Funktionsänderungen beim Speichern auf die Datenspeichereinheit 330 zugewiesen worden sind, individuell bestimmt werden.

Genauso kann die festlegbare oder festgelegte Zeitperiode auch über einen Ereignisablauf definiert werden, und zwar beispielsweise von einem Aufsperren des Fahrzeugs 300, einem ins Zündschloss-Stecken des Schlüssels, und/oder einem Anschalten der Antriebseinheit des Fahrzeugs 300 bis hin zu einem Ausschalten der Antriebseinheit des Fahrzeugs 300, einem Abziehen des Schlüssels aus dem Zündschloss, und/oder einem Absperren des Fahrzeugs 300.

Danach erfolgt im Schritt S102 das Auswerten der erfassten Informationen über das Energiespeichersystem 320, insbesondere der Fahrzeugfunktionsdaten, mit vorgegebenen Randbedingungen, insbesondere vorab festgelegter oder festlegbarer Fahrzeugfunktionsdaten und/oder Musterfahrzeugfunktionsdaten, wie in FIG. 3 dargestellt.

Die vorgegebenen Randbedingungen enthalten Informationen darüber, wofür das Energiespeichersystem 320 ausgelegt ist.

In der bevorzugten Ausführungsform umfassen die vorgegebenen Randbedingungen, insbesondere die vorab festgelegten oder festlegbaren Fahrzeugfunktionsdaten und/oder die Musterfahrzeugfunktionsdaten, bspw. Informationen darüber, wie oft welche Fahrzeugfunktion während einer wie langer Zeitperiode die entsprechende Fahrzeugfunktion erfüllt/nicht erfüllt hat. Die Fahrzeugfunktionsdaten umfassen wiederum Informationen, wie oft welche Fahrzeugfunktion während einer wie langen Zeitperiode die entsprechende Fahrzeugfunktion tatsächlich erfüllt/nicht erfüllt hat, insbesondere aus welchem Grund.

Anschließend erfolgt im Schritt S103 das Abschätzen des Zustands des Energiespeichersystems 320 des Fahrzeugs 300.

Insbesondere erfolgt das Abschätzen des Zustands des Energiespeichersystems 320 auf Grundlage der Auswertung (S102) der erfassten Informationen über das Energiespeichersystems 320 des Fahrzeugs 300 mit den vorgegebenen Randbedingungen.

Besonders bevorzugt erfolgt das Abschätzen des Zustands des Energiespeichersystems 320 auf Grundlage eines Vergleichs der erfassten Informationen über das Energiespeichersystem 320 mit den vorgegebenen Randbedingungen.

Die gestrichelten Linien deuten weitere mögliche Schritte an; nämlich den Schritt S104 in dem eine Ausgabeinformation über das Energiespeichersystem 320 des Fahrzeugs 300 auf Grundlage der erfassten Informationen über das Energiespeichersystem 320, insbesondere der Fahrzeugfunktionsdaten, generiert wird. Ferner kann die generierte Ausgabeinformation in einem Schritt S105 in Gestalt eines Datensatzes, einer graphischen Darstellung, und/oder einer graphischen Benutzeroberfläche bereitgestellt werden.

FIG. 4 zeigt einen weiteren Ablaufplan des Verfahrens, bei dem zunächst Informationen über das Energiespeichersystem 320 (S101), Informationen über Entladevorgänge (S101') und Informationen über Ladevorgänge (S101") des Energiespeichersystems 320 des Fahrzeugs 300 erfasst werden.

Dann werden die erfassten Informationen unter Berücksichtigung von vorgegebenen Randbedingungen ausgewertet (S102), bevorzugt verglichen, und anschließend der Zustand des Energiespeichersystems 320 des Fahrzeugs 300 abgeschätzt, insbesondere auf Grundlage der Auswertung, bevorzugt des Vergleichs, der erfassten Informationen über das Energiespeichersystem 320, der erfassten Informationen über die Entladevorgänge und der erfassten Informationen über die Ladevorgänge unter Berücksichtigung der vorgegebenen Randbedingungen, was dem Schritt S103' entspricht.

Auch wenn dies in den Figuren nicht ausdrücklich dargestellt ist, kann der Zustand des Energiespeichersystems 320 auch auf Grundlage der erfassten Informationen über die Entladevorgänge oder auf Grundlage der erfassten Informationen über die Ladevorgänge oder auf Grundlage der erfassten Informationen über die Entladevorgänge und Ladevorgänge abgeschätzt werden.

Die gestrichelten Linien in FIG. 4 deuten wiederum weitere mögliche Schritte an; nämlich den Schritt S104 in dem eine Ausgabeinformation über das Energiespeichersystem 320 des Fahrzeugs 300 auf Grundlage der erfassten Informationen, insbesondere der Fahrzeugfunktionsdaten, generiert wird. Ferner kann die generierte Ausgabeinformation auch in einem Schritt S105 in Gestalt eines Datensatzes, einer graphischen Darstellung, und/oder einer graphischen Benutzeroberfläche bereitgestellt werden.

Der Schritt S102 kann in einer Auswerteeinheit 130 der Vorrichtung 100 oder der Abschätzeinheit 120 der Vorrichtung 100 ausgeführt werden.

Die Fahrzeugfunktionsdaten können also dazu verwendet werden, um Abweichung von einem normalen Fahrzeugfunktion-Verhalten zu erfassen und um ein erwartetes Verhalten des Energiespeichersystems 320 abzuschätzen.

Die Ausgabeinformation kann des Weiteren dahingehend verwendet werden, um bspw. einen Fahrzeugeigentümer zu informieren, ob die Batterie der Auslöser dafür ist, dass das Fahrzeugverhalten vom erwarteten Verhalten abweicht. Es ist aber auch denkbar, dass die Ausgabeinformation dahingehend verwendet werden kann, um bspw. einen Fahrzeugeigentümer zu informieren, ob ein Batterieersatz die Abweichungen vom erwarteten Fahrzeugverhalten reduzieren würde.

In einer Weiterbildung, kann die generierte Ausgabeinformation auf einer Ausgabeeinheit 150 wiedergegeben werden.

Die Ausgabeeinheit 150 kann im Fahrzeug 300, bspw. als Display vorliegen, in der Vorrichtung 100, oder von Fahrzeug 300 und Vorrichtung 100 getrennt vorgesehen sein. Bevorzugt ist die Ausgabeeinheit 150 dazu vorgesehen, von einem Mitarbeiter einer Werkstatt und/oder eines Kundendiensts wahrgenommen zu werden.

Die Ausgabeeinheit 150 kann ein Mobiltelefon, insbesondere ein Smartphone, ein PC, insbesondere ein Tablet-PC und/oder ein Laptop, ein Display im Fahrzeug, und/oder eine graphische Benutzeroberfläche, und/oder ein Diagnosegerät, insbesondere ein Werkstatt-Diagnosegerät, sein.

In einer bevorzugten Ausführungsform kann eine Ausgabeinformation generiert werden, die den Ersatz des Energiespeichersystems 320 nahelegt, wenn eine signifikante Reduktion in der Erfüllung/Nichterfüllung von mindestens einer Fahrzeugfunktion festgestellt wird. Beispielsweise wenn mindestens eine Fahrzeugfunktion nur halb so oft oder weniger erfüllt worden ist als sie hätte erfüllt werden sollen. Des Weiteren kann eine Ausgabeinformation generiert werden, die einen Ersatz des Energiespeichersystems 320 erst dann nahelegt, wenn mindestens eine Fahrzeugfunktion nur in einem Drittel der Fälle oder weniger erfüllt worden ist als sie hätte erfüllt werden sollen.

Besonders bevorzugt werden diese Ausgabeinformationen dann generiert, wenn das Energiespeichersystem 320 als Grund bzw. Ursache für das Nichterfüllen der mindestens einen Fahrzeugfunktion ermittelt worden ist.

In einer Weiterbildung dieser bevorzugten Ausführungsform ist es denkbar, dass eine Ausgabeinformation generiert wird, die den Ersatz des Energiespeichersystems 320 innerhalb eines halben Jahres nahelegt, wenn eine signifikante Reduktion in der Erfüllung/Nichterfüllung von mindestens einer Fahrzeugfunktion festgestellt wird. Beispielsweise wenn mindestens eine Fahrzeugfunktion nur halb so oft oder weniger erfüllt worden ist als sie hätte erfüllt werden sollen.

Des Weiteren ist es auch denkbar, dass eine Ausgabeinformation generiert wird, die einen sofortigen Ersatz des Energiespeichersystems 320, sobald eine signifikante Reduktion in der Erfüllung/Nichterfüllung von mindestens einer Fahrzeugfunktion festgestellt wird. Beispielsweise wenn mindestens eine Fahrzeugfunktion nur in einem Drittel der Fälle oder weniger erfüllt worden ist als sie hätte erfüllt werden sollen.

Darüber hinaus können durchaus aktuell gemessene Werte des Energiespeichersystems 320 als zusätzliche Abschätzparameter zum Abschätzen des Zustands des Energiespeichersystems 320 hinzugezogen werden. Dazu werden die elektrischen Batterieeigenschaften und/oder das elektrische Verhalten des Energiespeichersystems gemessen. Vorzugsweise geschieht dies mit einem Batterietester 400, wie in FIG. 2 angedeutet.

Der Batterietester 400 kann dabei fahrzeugintern vorgesehen werden (nicht in den Figuren gezeigt) oder nur zur Messung an das Energiespeichersystem 320 angeschlossen werden.

Das Hinzuziehen der aktuell gemessenen Werte des Energiespeichersystems 320 des Fahrzeugs 300 steigert die Zuverlässigkeit und die Aussagekraft der Ausgabeinformation, da das Abschätzen des Zustands des Energiespeichersystems 320 auf zwei voneinander unabhängigen Wegen erzielt wird. Somit kann das Abschätzen des Zustands auf Grundlage der direkt gemessenen Werte einer Plausibilisierung des Abschätzens über das Fahrzeugverhalten dienen.

Ebenso kann zum Abschätzen des Zustands des Energiespeichersystems 320 Informationen zum Hersteller, zum Herstelldatum und/oder zum Typ des Energiespeichersystems 320 als zusätzliche Abschätzparameter berücksichtigt werden.

Um die Zuverlässigkeit und Genauigkeit der Abschätzung noch weiter zu steigern, können ebenso die Umgebungstemperatur, die Jahreszeit, sowie geographische Informationen in Betracht gezogen werden, da das Verhalten und die Lebensdauer eines Energiespeichersystems 320 bspw. stark davon abhängt, wo es bei welchen Umgebungstemperaturen in welchem Klima eingesetzt wird.

Auch Informationen über den Fahrzeugbetrieb tragen zur Steigerung der Abschätzgenauigkeit bei. So können die (mittlere) Geschwindigkeit, die (mittlere) Fahrtdistanz pro Tag/Woche/Monat/Jahr, die (mittlere) Fahrtdistanz pro Fahrt, die (mittlere) Zeitspanne an Stand-/Parkzeiten, und/oder die Zeitspanne zwischen Untersuchungen in der Werkstatt berücksichtigt werden.

Beispielsweise verhält sich ein Energiespeichersystem 320 eines Fahrzeugs 300, welches in einem heißen und feuchten Klima mit überwiegend Kurzstreckenfahrten und längeren Standzeiten betrieben wird, anders als ein Energiespeichersystem 320' eines Fahrzeugs 300', welches in einem kalten und trockenen Klima mit überwiegend Langstreckenfahrten und kürzeren Standzeiten betrieben wird, anders.

Die Vorrichtung 100 kann in einer bevorzugten Ausführungsform für eine Zustandsbestimmung eines Energiespeichersystems 320 eines Fahrzeugs 300 verwendet werden, um einen Ersatz des Energiespeichersystems 320, eine Wartung des Energiespeichersystems 320, und/oder eine Empfehlung bzgl. des Ersatzes oder der Wartung des Energiespeichersystems 320 nahe zu legen.

### Bezugszeichenliste

- 100: Vorrichtung zum Abschätzen des Zustands eines Energiespeichersystems
- 110: Empfängereinheit
- 120: Abschätzeinheit
- 130: Auswerteeinheit
- 140: Speichereinheit
- 150: Ausgabeeinheit
- 200: Verbindung zur Datenübertragung
- 300, 300': Fahrzeug
- 310: Schnittstelle
- 320, 320': Energiespeichersystem
- 330: Datenspeichereinheit
- 340: Vielzahl von Messeinheiten
- 400: Batterietester

## Patentansprüche

1. Verfahren zum Abschätzen eines Alterungszustands eines Energiespeichersystems (320) eines Fahrzeugs (300), wobei das Verfahren folgende Schritte aufweist:
i) Erfassen von Informationen über das Energiespeichersystem (320);
ii) Auswerten der erfassten Informationen unter Berücksichtigung von vorgegebenen Randbedingungen, wobei die vorgegebenen Randbedingungen vorab festgelegten Fahrzeugfunktionsdaten und/oder Musterfahrzeugdaten entsprechen; und
iii) Abschätzen des Alterungszustands des Energiespeichersystems (320),
wobei Fahrzeugfunktionsdaten aufgezeichnet werden zum Erfassen der Informationen über das Energiespeichersystem (320),
wobei über die Fahrzeugfunktionsdaten auf eine Funktionsänderung, und zwar ein Auftreten, Ausbleiben oder eine Funktionseinschränkung, von mindestens einer Fahrzeugfunktion rückgeschlossen wird bzw. rückschließbar ist, und
wobei die Fahrzeugfunktionsdaten Daten über das Erfüllen/Nichterfüllen von mindestens einer Fahrzeugfunktion umfassen, und zwar Daten über ein Abschalten und/oder Einschalten eines Verbrennungsmotors des Fahrzeugs (300) in einem Start-Stopp-Betrieb des Verbrennungsmotors,
und wobei die Fahrzeugfunktionsdaten auch Daten über einen Betrieb von mindestens einer Nutz- oder Sicherheitskomponente und Daten über einen Betrieb von mindesten einer Komfortkomponente umfassen,
wobei die Daten über den Betrieb von mindestens einer Nutz- oder Sicherheitskomponente folgende Daten sind:
- Daten über den Betrieb eines Kühlers eines Motors des Fahrzeugs (300), einer Innenraumbeleuchtung, einer Außenbeleuchtung, einer Servolenkung, einer Servobremse, eines Getriebes, einer Kupplung, von technischen Fahrsicherheits- und/oder Fahrstabilitätskontrollsysteme, und/oder von Fahrdynamik-Management-Systemen; und und
wobei die Daten über einen Betrieb von mindestens einer Komfortkomponente folgende Daten sind:
- Daten über den Betrieb einer Klimaanlage, einer Heizung, eines Audio-/Videoentertainmentsystems und/oder eines Navigationssystems,
wobei das Abschätzen des Alterungszustands des Energiespeichersystems (320) auf Grundlage der erfassten Informationen über das Energiespeichersystem (320) ohne Berücksichtigung von direkt respektive indirekt gemessenen Werten von einer Kapazität, Ladung, Spannung und/oder eines Stroms des Energiespeichersystems (320) erfolgt,
wobei zum Auswerten der erfassten Informationen die Fahrzeugfunktionsdaten mit den vorab festgelegten Fahrzeugfunktionsdaten und/oder den Musterfahrzeugdaten verglichen werden.

2. Verfahren nach Anspruch 1, welches ferner folgenden Schritt aufweist:
- Erfassen von Informationen über Entladevorgänge des Energiespeichersystems (320); und/oder
- Erfassen von Informationen über Ladevorgänge des Energiespeichersystems (320),
wobei die Fahrzeugfunktionsdaten aufgezeichnet werden zum Erfassen von Informationen über Entladevorgänge und/oder zum Erfassen von Informationen über Ladevorgänge.

3. Verfahren nach Anspruch 2, welches ferner folgende Schritte aufweist:
- Generieren einer Ausgabeinformation auf Grundlage der Fahrzeugfunktionsdaten; und
- Bereitstellen der generierten Ausgabeinformation, vorzugsweise in Gestalt eines Datensatzes, einer graphischen Darstellung und/oder einer graphischen Benutzeroberfläche,
wobei die Ausgabeinformation vorzugsweise eine Abschätzung des Alterungszustands des Energiespeichersystems (320) aufweist.

4. Verfahren nach Anspruch 3 oder 2,
wobei über die Fahrzeugfunktionsdaten auf eine Häufigkeit einer Funktionsänderung, insbesondere eines Auftretens, Ausbleibens oder einer Funktionseinschränkung, von mindestens einer Fahrzeugfunktion während einer festgelegten oder festlegbaren Zeitperiode rückgeschlossen wird bzw. rückschließbar ist.

5. Verfahren nach einem der Ansprüche 2 bis 4,
wobei über die Fahrzeugfunktionsdaten auf eine für eine Funktionsänderung von mindestens einer Fahrzeugfunktion benötigte Zeitspanne rückgeschlossen wird bzw. rückschließbar ist, wobei die Funktionsänderung insbesondere ein Auftreten, Ausbleiben oder eine Funktionseinschränkung umfasst, und/oder
wobei über die Fahrzeugfunktionsdaten auf einen Grund/eine Ursache für eine Funktionsänderung, insbesondere ein Auftreten, Ausbleiben oder eine Funktionseinschränkung, von mindestens einer Fahrzeugfunktion rückgeschlossen wird bzw. rückschließbar ist.

6. Verfahren nach einem der Ansprüche 1 bis 5,
wobei zum Abschätzen des Alterungszustands des Energiespeichersystems (320) Informationen zum Hersteller, Herstelldatum und/oder Typ des Energiespeichersystems (320) als zusätzliche Abschätzparameter berücksichtigt werden.

7. Verfahren nach einem der Ansprüche 1 bis 6,
wobei das Abschätzen des Alterungszustands des Energiespeichersystems (320) mit Hilfe eines softwarebasierten Simulationsmodells, ausgeführt wird, wobei die erfassten Informationen über das Energiespeichersystem (320), die erfassten Informationen über Entladevorgänge und/oder die erfassten Informationen über Ladevorgänge vorzugsweise Eingangswerte für das softwarebasierte Simulationsmodell sind.

8. Verfahren nach einem der Ansprüche 1 bis 6, wobei das Energiespeichersystem (320) als Sekundärbatterie, insbesondere Akkumulator, und/oder als Doppelschichtkondensator und/oder als Brennstoffzelle oder als jedwede Kombination hiervon ausgebildet ist.

9. Vorrichtung (100) zum Ausführen des Verfahrens nach einem der Ansprüche 1 bis 8.

10. Vorrichtung (100) nach Anspruch 9,
wobei die Vorrichtung (100) ferner Folgendes aufweist:
- eine Wiedergabeeinheit (160), welche dazu ausgelegt ist, den abgeschätzten Alterungszustand des Energiespeichersystems (320) wiederzugeben; und/oder
- eine Auswerteeinheit (130), welche dazu ausgebildet ist, die erfassten Informationen über das Energiespeichersystem (320), und/oder die erfassten Informationen über Entladevorgänge des Energiespeichersystems (320) und/oder die erfassten Informationen über Ladevorgänge des Energiespeichersystems (320) unter Berücksichtigung von vorgegebenen Randbedingungen auszuwerten.

11. Vorrichtung (100) nach Anspruch 10 oder 9, wobei die Vorrichtung (100) im Fahrzeug (300) angeordnet ist, oder wobei die Vorrichtung (100) räumlich und/oder körperlich getrennt vom Fahrzeug (300) angeordnet ist, wobei die Vorrichtung (100) zur Übertragung (200) der Fahrzeugfunktionsdaten mittels einer Schnittstelle (310) am Fahrzeug (300) mit dem Fahrzeug (300) verbunden ist.

12. Verwendung der Vorrichtung (100) nach einem der Ansprüche 9 bis 11 für eine Alterungszustandsbestimmung des Energiespeichersystems (320) des Fahrzeugs (300), bezüglich:
- eines Ersatzes des Energiespeichersystems (320);
- einer Wartung des Energiespeichersystems (320); und/oder
- einer Empfehlung bezüglich des Ersatzes oder der Wartung des Energiespeichersystems (320).

## Claims

1. Method for estimating a state of health of an energy storage system (320) of a vehicle (300), wherein the method includes the following steps:
i) acquiring information about the energy storage system (320);
ii) evaluating the acquired information while taking into account predefined boundary conditions, wherein the predefined boundary conditions correspond to previously specified vehicle function data and/or model vehicle data; and
iii) estimating the state of health of the energy storage system (320), wherein vehicle function data are recorded for acquiring the information about the energy storage system (320),
wherein a function change, specifically an occurrence, an absence or a function restriction, of at least one vehicle function is concluded or can be concluded from the vehicle function data, and
wherein the vehicle function data comprise data concerning the fulfilment/non-fulfilment of at least one vehicle function, specifically data concerning switching off and/or switching on of a combustion engine of the vehicle (300) in a start-stop mode of the combustion engine, and
wherein the vehicle function data also comprise data concerning the operation of at least one functional component or safety component and data concerning the operation of at least one comfort component,
wherein the data concerning the operation of at least one functional component or safety component are the following data:
- data concerning the operation of a radiator of an engine of the vehicle (300), internal lighting, external lighting, power steering, power braking, a gearbox, a clutch, technical driving safety systems and/or riding stability control systems, and/or driving dynamics management systems; and
wherein the data concerning the operation of at least one comfort component are the following data:
- data concerning the operation of an air-conditioning system, heating, an audio/video entertainment system and/or a navigation system,
wherein the state of health of the energy storage system (320) is estimated on the basis of the acquired information about the energy storage system (320) without taking into account directly or indirectly measured values of a capacitance, charge, voltage, and/or a current of the energy storage system (320),
wherein, to estimate the acquired information, the vehicle function data are compared with the previously specified vehicle function data and/or the model vehicle data.

2. Method according to Claim 1, which also includes the following steps:
- acquiring information about discharge processes of the energy storage system (320); and/or
- acquiring information about charging processes of the energy storage system (320),
wherein the vehicle function data are recorded for acquiring information about discharge processes and/or for acquiring information about charging processes.

3. Method according to Claim 2, which also includes the following steps:
- generating output information on the basis of the vehicle function data; and
- providing the generated output information, preferably in the form of a data record, a graphical representation and/or a graphical user interface,
wherein the output information preferably includes an estimate of the state of health of the energy storage system (320).

4. Method according to Claim 3 or 2,
wherein a frequency of a function change, in particular an occurrence, an absence or a function restriction, of at least one vehicle function during a specified or specifiable period of time is concluded or can be concluded from the vehicle function data.

5. Method according to one of Claims 2 to 4,
wherein a time period required for a function change of at least one vehicle function is concluded or can be concluded from the vehicle function data, wherein the function change in particular comprises an occurrence, an absence or a function restriction, and/or
wherein a reason for/a cause of a function change, in particular an occurrence, an absence or a function restriction, of at least one vehicle function is concluded or can be concluded from the vehicle function data.

6. Method according to one of Claims 1 to 5,
wherein, to estimate the state of health of the energy storage system (320), information about the manufacturer, the date of manufacture and/or type of the energy storage system (320) is taken into account as an additional estimation parameter.

7. Method according to one of Claims 1 to 6,
wherein estimating the state of health of the energy storage system (320) is carried out using a software-based simulation model, wherein the acquired information about the energy storage system (320), the acquired information about discharge processes and/or the acquired information about charging processes are preferably input values for the software-based simulation model.

8. Method according to one of Claims 1 to 6,
wherein the energy storage system (320) is in the form of a secondary battery, in particular an accumulator, and/or a double-layer capacitor and/or a fuel cell or any combination thereof.

9. Device (100) for performing the method according to one of Claims 1 to 8.

10. Device (100) according to Claim 9,
wherein the device (100) also includes the following:
- a reproduction unit (160) that is configured to reproduce the estimated state of health of the energy storage system (320); and/or
- an evaluation unit (130) that is designed to evaluate the acquired information about the energy storage system (320), and/or the acquired information about discharge processes of the energy storage system (320) and/or the acquired information about charging processes of the energy storage system (320) while taking into account predefined boundary conditions.

11. Device (100) according to Claim 10 or 9,
wherein the device (100) is arranged in the vehicle (300), or wherein the device (100) is arranged spatially and/or physically separately from the vehicle (300), wherein the device (100) is connected to the vehicle (300) for transferring (200) the vehicle function data to the vehicle (300) by means of an interface (310).

12. Use of the device (100) according to one of Claims 9 to 11 for determining the state of health of the energy storage system (320) of the vehicle (300), regarding:
- replacement of the energy storage system (320);
- maintenance of the energy storage system (320); and/or
- a recommendation regarding the replacement or the maintenance of the energy storage system (320).

## Revendications

1. Procédé pour estimer un état de vieillissement d'un système accumulateur d'énergie (320) d'un véhicule (300), le procédé comprenant les étapes suivantes :
i) acquisition d'informations à propos du système accumulateur d'énergie (320) ;
ii) interprétation des informations acquises en tenant compte de conditions marginales prédéfinies, les conditions marginales prédéfinies correspondant à des données de fonction de véhicule et/ou des données de modèle de véhicule préalablement spécifiées ; et
iii) estimation de l'état de vieillissement du système accumulateur d'énergie (320), des données de fonction de véhicule étant enregistrées pour acquérir les informations à propos du système accumulateur d'énergie (320),
une modification de fonction, à savoir une survenance, une absence ou une restriction de fonctionnement d'au moins une fonction du véhicule étant déduite ou étant déductible par le biais des données de fonction de véhicule, et
les données de fonction de véhicule comportant des données à propos de l'accomplissement / du non-accomplissement d'au moins une fonction du véhicule, et à savoir des données à propos d'une mise à l'arrêt et/ou d'une mise en marche d'un moteur à combustion interne du véhicule (300) dans un mode d'arrêt-démarrage automatique du moteur à combustion interne, et les données de fonction de véhicule comportant également des données à propos d'un fonctionnement d'au moins un composant utilitaire ou de sécurité et des données à propos d'un fonctionnement d'au moins un composant de confort,
les données à propos du fonctionnement d'au moins un composant utilitaire ou de sécurité étant les données suivantes :
- des données à propos du fonctionnement d'un radiateur du véhicule (300), d'un éclairage de l'habitacle, d'un éclairage extérieur, d'une direction assistée, d'un frein assisté, d'une boîte de vitesses, d'un embrayage, de systèmes techniques de sécurité de conduite et/ou de contrôle de la stabilité de conduite et/ou de systèmes de gestion de la dynamique de conduite ; et
les données à propos d'un fonctionnement d'au moins un composant de confort étant les données suivantes :
- des données à propos du fonctionnement d'un climatiseur, d'un chauffage, d'un système d'infodivertissement audio/vidéo et/ou d'un système de navigation,
l'estimation de l'état de vieillissement du système accumulateur d'énergie (320) s'effectuant sur la base des informations acquises à propos du système accumulateur d'énergie (320) sans tenir compte de de valeurs directes respectivement mesurées indirectement d'une capacité, d'une charge, d'une tension et/ou d'un courant du système accumulateur d'énergie (320),
les données de fonction de véhicule étant comparées avec les données de fonction de véhicule et/ou les données de modèle de véhicule préalablement spécifiées en vue d'interpréter les informations acquises.

2. Procédé selon la revendication 1, lequel comprend en outre les étapes suivantes :
- acquisition d'informations à propos de processus de décharge du système accumulateur d'énergie (320) ; et/ou
- acquisition d'informations à propos de processus de charge du système accumulateur d'énergie (320),
les données de fonction de véhicule étant enregistrées pour acquérir des informations à propos des processus de décharge et/ou pour acquérir des informations à propos des processus de charge.

3. Procédé selon la revendication 2, lequel comprend en outre les étapes suivantes :
- génération d'une information de sortie sur la base des données de fonction de véhicule ; et
- mise à disposition de l'information de sortie générée, de préférence sous la forme d'un jeu de données, d'une représentation graphique et/ou d'une interface utilisateur graphique,
l'information de sortie présentant de préférence une estimation de l'état de vieillissement du système accumulateur d'énergie (320).

4. Procédé selon la revendication 3 ou 2,
une fréquence d'une modification de fonction, notamment d'une survenance, d'une absence ou d'une restriction de fonctionnement d'au moins une fonction du véhicule pendant une période spécifiée ou spécifiable étant déduite ou étant déductible par le biais des données de fonction de véhicule.

5. Procédé selon l'une des revendications 2 à 4,
un intervalle de temps nécessaire pour une modification de fonction d'au moins une fonction de véhicule étant déduit ou étant déductible par le biais des données de fonction de véhicule, la modification de fonction comprenant notamment une survenance, une absence ou une restriction de fonctionnement, et/ou
un motif / une cause pour une modification de fonction, notamment une survenance, une absence ou une restriction de fonctionnement d'au moins une fonction de véhicule étant déduit ou étant déductible par le biais des données de fonction de véhicule.

6. Procédé selon l'une des revendications 1 à 5,
des informations à propos du fabricant, de la date de fabrication et/ou du type du système accumulateur d'énergie (320) étant pris en compte en tant que paramètres d'estimation supplémentaires pour l'estimation de l'état de vieillissement du système accumulateur d'énergie (320).

7. Procédé selon l'une des revendications 1 à 6,
l'estimation de l'état de vieillissement du système accumulateur d'énergie (320) étant effectué à l'aide d'un modèle de simulation basé sur logiciel, les informations acquises à propos du système accumulateur d'énergie (320), les informations acquises à propos des processus de décharge et/ou les informations acquises à propos des processus de charge étant de préférence des valeurs d'entrée pour le modèle de simulation basé sur logiciel.

8. Procédé selon l'une des revendications 1 à 6,
le système accumulateur d'énergie (320) étant réalisé sous la forme d'une batterie secondaire, notamment d'un accumulateur et/ou d'un condensateur à double couche et/ou d'une pile à combustible ou de toute combinaison de ces éléments.

9. Dispositif (100) destiné à mettre en oeuvre le procédé selon l'une des revendications 1 à 8.

10. Dispositif (100) selon la revendication 9,
le dispositif (100) comprenant en outre ce qui suit :
- une unité de restitution (160), laquelle est conçue pour restituer l'état de vieillissement estimé du système accumulateur d'énergie (320) ; et/ou
- une unité d'interprétation (130), laquelle est conçue pour interpréter les informations acquises à propos du système accumulateur d'énergie (320) et/ou les informations acquises à propos des processus de décharge du système accumulateur d'énergie (320) et/ou les informations acquises à propos des processus de charge du système accumulateur d'énergie (320) en tenant compte de conditions marginales prédéfinies.

11. Dispositif (100) selon la revendication 10 ou 9,
le dispositif (100) étant disposé dans le véhicule (300), ou le dispositif (100) étant disposé séparément spatialement et/ou physiquement du véhicule (300), le dispositif (100) étant relié au véhicule (300) en vue de la transmission (200) des données de fonction de véhicule au moyen d'une interface (310) sur le véhicule (300).

12. Utilisation du dispositif (100) selon l'une des revendications 9 à 11 pour une détermination d'état de vieillissement du système accumulateur d'énergie (320) du véhicule (300), concernant :
- un remplacement du système accumulateur d'énergie (320) ;
- une maintenance du système accumulateur d'énergie (320) ; et/ou
- une recommandation concernant le remplacement ou la maintenance du système accumulateur d'énergie (320).
